# EUROPEAN PATENT SPECIFICATION

(11) **EP 4 186 774 B1**
(45) Date of publication and mention of the grant of the patent: **11.09.2024**
(21) Application number: 21000338.0
(22) Date of filing: 24.11.2021
(51) Int. Cl.: B61K 9/04, F16C 19/52

(54) **WIRELESS BEARING MONITORING SYSTEM WITH MOBILE MEASURING DEVICE FOR VEHICLES, AGRICULTURAL AND INDUSTRIAL MACHINERY**
KABELLOSES LAGERÜBERWACHUNGSSYSTEM MIT MOBILEM MESSGERÄT FÜR FAHRZEUGE, LAND- UND INDUSTRIEMASCHINEN
SYSTÈME DE SURVEILLANCE SANS FIL DES ROULEMENTS AVEC DISPOSITIF DE MESURE MOBILE POUR VÉHICULES, MACHINES AGRICOLES ET INDUSTRIELLES

(43) Date of publication of application: 31.05.2023
(73) Proprietor: Tóth, Péter, 4002 Debrecen (HU)
(72) Inventor: Tóth, Péter, 4002 Debrecen (HU)

(56) References cited:
- CN-A- 110 567 693
- GB-A- 2 550 541
- US-A1- 2014 152 426

## Description

The invention relates to a wireless bearing monitoring system with a mobile measuring device for vehicles, agricultural and industrial machinery. The monitoring system continuously monitors the condition of one or more bearings operating in a vehicle, and continuously displays the physical parameters of the bearing/bearings. It detects a fire hazard due to bearing failure from the simultaneous measurement of the locally measured vibration and temperature of the bearings, and changes in the ambient temperature and humidity.

A bearing failure in vehicles, agricultural machinery, and a great variety of industrial machinery can cause significant damage. It is important to predict the wear and tear, failure of bearings.

In the case of agricultural machinery, one of the common causes of accidents is fire. And fire can be caused, among other things, by bearing failure. For example, variable-chamber belt balers have a tendency to catch fire due to the fact that the worn bearings get stuck, and mechanical friction can result in high temperatures (800-1000 °C) that easily ignite the straw in the bale chamber.

The continuous vibration of bearings can accelerate the wear and tear process.

That is why it is so important to predict the wear and tear, failure of bearings.

As it is known, when testing and checking the operation of bearings, the temperature, vibration and acceleration of the bearing, and the ambient temperature of the bearing are measured.

In the prior art devices are known for maintaining the safe operation of vehicles, which are suitable for monitoring the wheel bearings of vehicles, e.g. trains and cars during operation, by monitoring certain physical parameters.

Systems are known for monitoring the operation of railway vehicles, which measure and monitor, through sensor units connected to the rotating parts of trains, certain physical parameters of the rotating parts, such as temperature, vibration and acceleration. By monitoring the changes in these parameters during the operation of the vehicle and transmitting the measured parameters in real time, the safe operation of the vehicle can be maintained, as disclosed in Chinese patents No. CN109238753 and No. CN106627658.

Utility model No. CN209505760 relates to a wireless monitoring system for monitoring the bearing temperature of railway freight cars. The device is fixed on the bearings of railway freight cars. The bearing cover is covered by a casing, and an air gap between the outer casing and the bearing cover forms a cavity for the sensing node and the aggregation node of the monitoring system, which are connected to a circuit board and a generator. The outer end surface of the temperature sensor is fitted to the bearing cover, and its base is fixed on the circuit board. The device is fixed on the bearings by mounting bolts. If the temperature exceeds the set threshold, an alarm message is sent via a Bluetooth, Wi-Fi or GPRS communication module included in the device to the management centre of the train to take appropriate measures.

International patent application with publication No. WO2001089903 discloses a monitoring system for railway vehicles comprising a sensor unit placed in the vicinity of a wheel axle end and a processing arrangement. The sensor unit comprises sensors, a power supply, means for processing and encoding information, and also includes communication means. Data measured by the sensor unit is transmitted via the communication means to the processing arrangement. The sensor unit comprises sensors for sensing one or more of the parameters of vibration, temperature, velocity and acceleration. The sensor unit also comprises means for some processing of sensor data, communication means, and a power supply. Energy is generated from the rotation of the wheel axle. A polarised member is arranged at the wheel axle, thereby inducing current in an armature coil.

Patent No. US3023604 relates to test instruments for measuring the overall dynamic operating quality of a ball-bearing assembly, and more particularly to an instrument which is adapted to test such a ball-bearing assembly by measuring the axial vibrations produced by bearing defects. In a preferred embodiment of the invention a velocity sensitive electromechanical transducer is employed to sense the axial vibrations.

Patent application No. GB2550541A relates to a condition monitor for monitoring vibration of a structure or machine comprises an enclosure; at least one vibration sensor within the enclosure; a processor located within the enclosure, the processor connected to the at least one sensor for analysing signals produced therefrom; data storage within the enclosure for buffering data prior to wireless transfer; means for mounting the monitor to the structure or machine; and a wireless transmitter. The mounting may be achieved by one or two magnets integral to the monitor, the magnets having a curved mating surface for contact with the structure or machine. The vibration sensors may comprise two or more biaxial sensors, providing simultaneous measurements over three axes. The monitor may determine faults using an algorithm that evaluates parameters including vibration amplitude, number of harmonics, total signal level, and noise floor level. The monitor may also comprise a temperature sensor for monitoring temperature.

Patent application No. US 2014/0152426A1 describes a method of reading sensor values from or writing programming alarm and monitoring algorithm parameters into a warning device for monitoring a bearing having a close range wireless interface is disclosed. The method of reading or writing includes providing an RFID tag having an integrated circuit with memory, a radio for modulating and demodulating a radio-frequency signal, an antenna for receiving and transmitting the radio-frequency signal, and a digital bus mounted to a PCB, the digital bus connecting a microcontroller to the RFID tag. The warning device monitors the health status of a bearing , which is normally mounted to a piece of rotating industrial machinery, e.g. motors, fans, conveyors and pumps. The warning device has a generally cylindrical body portion that is connected to an annular top portion. The annular top portion includes at least one tri-color light emitting diode for displaying the health status of the bearing. The warning device further provides at least one sensor that senses at least one of a velocity, an enveloped acceleration and a temperature value of the bearing. The sensor is mounted to a Printed Circuit Board, which is in tern potted inside the body and base portion. When a sensor senses a change in velocity or acceleration or temperature it sets off an alarm.

The invention of the application No. CN110567693A discloses a novel industrial vibration temperature measuring instrument which comprises a measuring module, a mobile terminal and a server management platform, wherein the bottom of the measuring module is provided with a magnetic suction plate which adsorbs tested equipment through magnetic force; the measuring module comprises a battery unit, and a vibration acquisition unit, a temperature acquisition unit, a signal conditioning circuit, a wireless transmission unit and a micro-processing unit which are connected with the battery unit, wherein the vibration acquisition unit is an XY-axis bidirectional vibration sensor and is used for measuring the vibration information of X, Y two directions of the equipment to be measured; the temperature acquisition unit is arranged on the magnetic suction plate and is adsorbed on the adsorption surface of the tested equipment, the temperature acquisition unit and the vibration acquisition unit are connected with the signal conditioning circuit, and the output end of the signal conditioning circuit is connected with the micro-processing unit. The invention effectively simplifies the steps and the flow of field installation and use, and can monitor the vibration and temperature information of the tested equipment component, thereby giving an alarm for abnormal conditions.

Patent application No. CN1 10145549 relates to a wheel hub bearing unit monitoring and early warning system for an automobile, which monitors the bearing during operation by monitoring the bearing temperature and the vibration due to external interference. The device comprises a temperature sensor, a vibration sensor and a signal analysis chip. An encryption module is mounted on the chip, and the analysed information is sent to the vehicle controller through the encryption module. The device is powered by battery. The device has a screw-shaped housing comprising a bolt, a screw head and a cover plate. The housing further comprises a heat insulating sleeve and a heat insulating gasket. The temperature sensor is mounted on the housing, and is connected to the signal analysis chip through a signal rod in the bolt. The signal rod transmits the temperature signal collected by the temperature sensor to the signal analysis chip. The vibration sensor is mounted on the screw head, and is connected to the signal analysis chip through a vibration transmitting metal rod in the screw head. The vibration transmitting metal rod transmits the vibration signal collected by the vibration sensor to the signal analysis chip.

The ABB ability smart sensor (https://new.abb.com/motors-generators/service/advanced-services/smart-sensor) is a wireless device for small bearings, which is suitable for monitoring the temperature and vibration of bearings. The sensor can only be used for bearings that have a part with a special mounting hole for fixing the sensor by means of an adapter. This special design is a disadvantage for the ABB ability sensor, as it cannot be used for conventional bearings.

Patent No. EP20150306610 relates to a sensor device for sensing and monitoring the physical parameters of machines, workstations, treatment or production plants, industrial an/or similar technical equipment. The sensor device comprises at least one sensor, a housing and a base plate. The sensor, which is typically a presence, position or motion sensor, is located outside the housing, fixed to, placed inside, or at least partially integrated into the equipment, and is connected to the base plate in the housing by an electrical wire surrounded by a rigid coating. The housing is mechanically fixed to the relevant equipment in an easily accessible place, preferably on the surface, and in a visible manner, by means of the base plate. This design allows the sensor to be placed inside the equipment to be monitored, while the easily accessible housing most at risk of damage can be replaced/repaired without having to remove the other parts - the sensor and the base plate.

The above solutions can be used efficiently to monitor the parameters indicating the condition of the rotating parts of vehicles (wheels, axles, bearings), their disadvantage is that the devices measuring the condition of the rotating parts are integrated into the given rotating part and/or their mounting is time and energy consuming. These measuring devices are not mobile, they cannot be moved from one bearing to another without dismounting and remounting.

It is an aim of this invention to provide a system, as defined in independent claim 1, that continuously and simultaneously monitors in real time all important physical and ambient parameters of one or more bearings operating in a vehicle, agricultural or industrial machinery or equipment.

It is a further aim of this invention to provide a measuring device with sensors which has a small area, allowing it to be placed in the vicinity of any bearing of a vehicle, and which can be easily and firmly fixed without mounting in the immediate vicinity of the bearing to be monitored, in order to provide a very accurate measurement of the physical parameters of the bearing.

It is another aim to be able to move the same measuring device to the vicinity of another bearing of the given machine or vehicle at any time without dismounting and remounting.

It is yet another aim to provide a system able to contain multiple, up to 2 to 12 measuring devices, and thus, as one measuring device measures the parameters of one bearing, a system able to monitor 2 to 12 bearings of a vehicle simultaneously.

The idea of the invention is based on the recognition that a vehicle includes a lot of bearings, the wear and tear of which occurs at very different times. It would be a very costly solution to place a monitoring device on each bearing of a vehicle. The operator of the vehicle, on the other hand, knows which bearings have been in operation for a long time, or which bearings are under increased load, e.g. continuous vibration, i.e. he knows which bearings need special attention. A mobile measuring device that can be placed at will, and can be placed easily and safely on different bearings, bearing housings of a vehicle, machine or equipment, or in their immediate vicinity, and continuously monitors the physical parameters of bearing operation, greatly increases the safety of the vehicle, machine or equipment.

It is further recognized that if the infrared temperature sensor of the measuring device is not rigidly but flexibly connected, the sensor can be directed to the bearing to be monitored at an appropriate proximity and angle, thereby providing very accurate data on the bearing temperature.

It is still further recognized that the known solutions fail to take into account the ambient humidity of the bearing, although in case of a too low humidity level there may be a risk of self-ignition, e.g. the stuck dust can catch fire, and the fire can spread to the surrounding parts containing rubber or plastic. For example, there is a correlation between ambient humidity and the moisture content of straw.

Thus, the invention relates to a monitoring system comprising one or more measuring devices, an online communication device, e.g. a smart phone, tablet or laptop, and a wireless connection between the measuring device and the online device. The measuring device and the online device are connected by means of radio waves, through a Wi-Fi (Wireless Fidelity) network connected to the Internet.

The measuring device has a closed housing, the housing contains a two-sided printed circuit board, and a charging unit and a battery are fixed to the lower side, and a microcontroller, an acceleration sensor and an ambient temperature and humidity sensor are fixed to the upper side of the printed circuit board. The printed circuit board is fixed to the housing by means of screws, the parts are fixed to the printed circuit board by soldering, using the through-hole and surface mounting technologies.

A vibration sensor is fixed to the inside of the bottom of the housing by gluing, which is connected to the printed circuit board by an electrical wire. There is a vent plug in one side wall of the housing for equalizing humidity inside and outside the measuring device, preferably an IP66-rated vent plug.

One of the side walls of the housing is provided with an opening, a flexible hose extending from the housing is fixed into the opening in a releasable manner, and the other end of the hose contains an infrared temperature sensor. The infrared temperature sensor is connected to the printed circuit board by an electrical wire. A threaded end of the hose passes through the opening of the housing, and is fixed to the inside of the housing by a nut. The hose is made of a flexible material, i.e. it can be easily bent in any direction, it can be made of metal or silicone, and the length of the hose is between 10 and 20 cm.

There are at least two magnets on the outside of the bottom of the housing, the magnets are fixed in an unreleasable manner, preferably by gluing. The magnets provide a very strong releasable connection between the given surface of the vehicle and the housing of the measuring device. The magnets are selected from a group consisting of the strongest magnets, they are preferably neodymium magnets.

An electrical wire runs from each of two magnets, the electrical wires lead into the housing, the electrical wire running from one of the magnets provides the ground for the measuring device, the electrical wire running from the other magnet provides power supply to the charging unit, and thereby to the battery and the measuring device. The wires are fixed to the magnets by soldering. There can be more than two magnets on the housing, in which case the third or any additional magnet serves only the purpose of fixing the measuring device to the surface of the vehicle. The magnets are preferably rectangular or circular shaped.

The control unit of the measuring device is a programmed microcontroller, which collets and processes, converts into HTML format the signals received from the sensors via the printed circuit board, and transmits them via Wi-Fi to the online device, which displays in real time the various parameters: the temperature, vibration and acceleration data of the bearing, and the ambient temperature and humidity of the bearing.

The components of the measuring device are powered by the battery, which is preferably a Li-ion battery. The battery is connected to the charging unit, which is charged through the magnets. The magnets charge the battery through the charging unit by means of a charging station.

The measuring device is charged by placing the measuring device with the magnets on the charging station. During charging, the metal part of the charging station is in contact with the magnets, and the charging unit is charged via the wires connected to the magnets, thereby ensuring the charging of the battery. The battery charge level is displayed on the online device.

There is no physical power button on the measuring device. When the measuring device placed on a surface to be monitored senses the vibration of the vehicle, it will automatically activate the system if an online connection exists. When the online connection and/or the vibration ceases, the system will "shut down".

The data received from the sensors are continuously displayed on the online device, the data show the operating parameters of the bearing/bearings in real time. If a value is outside the range required for proper operation, the operator of the machinery will see, or the system will give an - audible and/or visual - warning, showing which bearing needs attention, so that he can take the necessary action. The operating temperature of bearings operating properly is between 60 and 80°C. The main task of the monitoring system is to detect a deviation from the normal operating range of the bearings.

Main characteristics of the sensors of the measuring device:
- the infrared temperature sensor is suitable for contactless temperature measurement in the range -70°C ~ +380°C,
- the acceleration sensor measures the change in bearing speed along the x,y,z axes. Measuring range: ±19.61, ±39.23, ±78.45, ±156.91 m/s², by default ±78.45 m/s²,
- the vibration sensor preferably uses a piezoelectric crystal, measuring range: -10 ~ + 70 mV,
- the ambient temperature and humidity sensor measures the ambient temperature of the bearing in the range -40 ~ +125 °C, and relative humidity in the range 0 ~ 100%.

In a preferred embodiment, a system comprises one measuring device.

In another preferred embodiment, a system comprises six measuring devices, which measuring devices transmit data simultaneously on the parameters of six different bearings of a given machine or equipment to an online device.

The invention will be described in detail with reference to the following figures, without limiting the scope of protection to the embodiments shown in the following figures:
Figure 1: shows a side view of the measuring device according to the invention, where the measuring device is placed on the surface of a vehicle in the vicinity of a bearing;
Figure 2: shows a top view of the measuring device according to the invention, where the measuring device is placed on the surface of a vehicle in the vicinity of a bearing;
Figure 3: shows a longitudinal sectional view of the measuring device according to the invention.

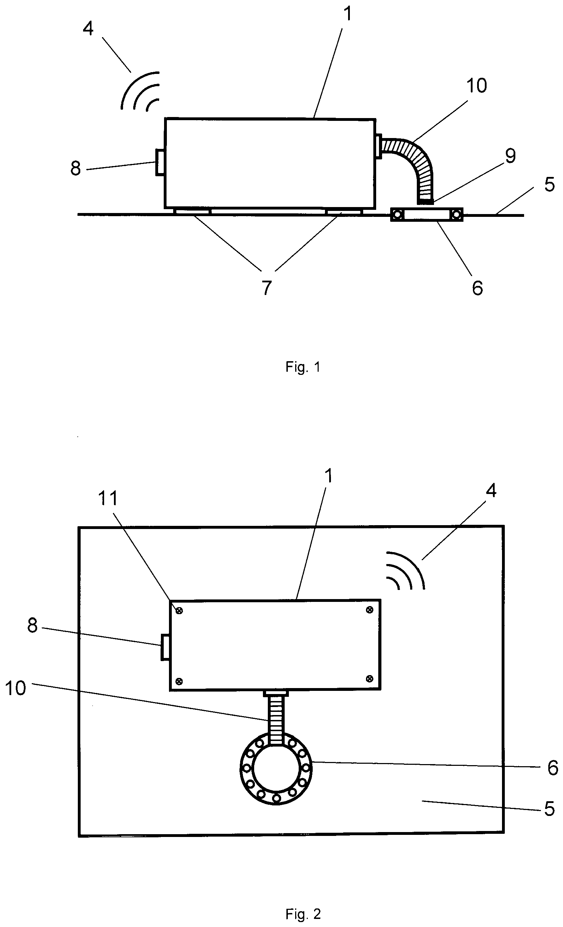

Figure 1 shows the housing 1 of the measuring device, magnets 7 fixed to the outside of the bottom thereof, which magnets 7 fix the housing 1 firmly to the surface 5 of a vehicle, in the vicinity of a bearing 6. There is a vent plug 8 in one side wall of the housing 1, and on the opposite side wall a flexible hose 10 is fixed to the housing 1. The other, non-fixed end of the hose 10, which contains an infrared temperature sensor 9, is placed in the immediate vicinity of the bearing 6 to be monitored. The measuring device transmits Wi-Fi signals 4 that are received by an online device.

Figure 2 shows a bearing 6 mounted on the surface 5 of a vehicle, and a measuring device fixed to the surface 5 in the vicinity of the bearing 6. The top view shows the screws 11 fixing the cover of the housing 1 to the rest of the housing 1, the side walls thereof. The end of the hose 10 is bent on the bearing 6.

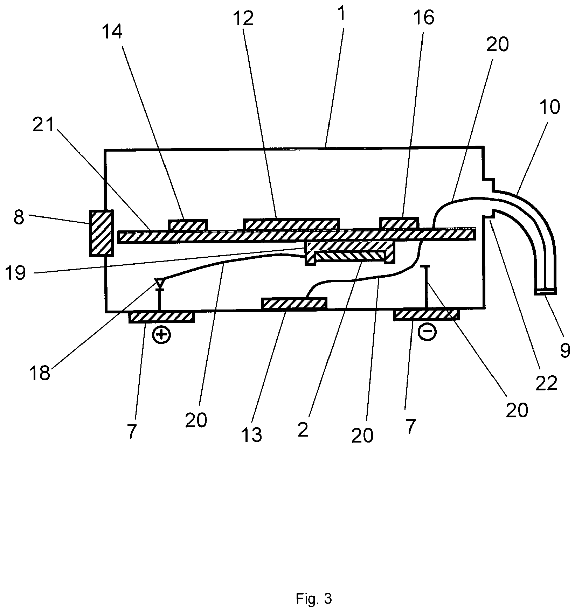

Figure 3 shows the components of the measuring device and their connection to each other. In the middle part of the housing 1 there is a printed circuit board 21, on the upper side of which there is an ambient temperature and humidity sensor 16, a microcontroller 12, and an acceleration sensor 14.

On the lower side of the printed circuit board 21 there is a charging unit 19, which is in contact with a battery 2.

There is an opening 22 in one side wall of the housing 1, with a flexible hose 10 fixed into it, the other end of which contains an infrared temperature sensor 9, from which an electrical wire 20 runs to the printed circuit board 21 through the hose 10.

A vent plug 8 is incorporated into the side wall of the housing 1 opposite to the side wall containing the hose 10.

A vibration sensor 13 is fixed to the inside of the bottom of the housing 1 by gluing, from which an electrical wire 20 fixed by soldering runs to the printed circuit board 21. Two magnets 7 are fixed to the outside of the bottom of the housing 1. An electrical wire 20 is connected to each of the magnets 7. The electrical wire 20 running from one of the magnets 7 provides the ground, the electrical wire 20 running from the other magnet 7 is provided with a diode 18 and leads to the charging unit 19. The magnets 7 serve as charging points, when the measuring device is placed on a charging station to charge the charging unit 19 with electricity. In the Figure, the charging polarity is marked with + and -. The diode 18 installed between the magnet 7 and the charging unit 19 protects the system from electrical short circuits.

The operation and use of the system according to the invention is as follows.

The driver/operator of an agricultural machine fixes the housing 1 of the measuring device to the bearing housing of a selected bearing 6 or in the immediate vicinity thereof by means of the neodymium magnets 7, and manually bends the end of the hose 10 containing the infrared temperature sensor 9 directly above the bearing 6. The distance between the infrared temperature sensor 9 and the bearing is 1 to 10 cm, preferably 2 to 4 cm.

When an online connection is established, the movement of the vehicle generates vibrations in the vibration sensor 13, which activates the system, and then, during the operation of the bearing 6, the temperature, acceleration and vibration data thereof, and the ambient temperature and humidity data of the bearing 6 are continuously transmitted via Wi-Fi to, and displayed in real time by the online communication device.

If the system contains multiple, e.g. six measuring devices, the driver/operator of the agricultural machine places six measuring devices on the vehicle, in the vicinity of six different bearings 6. Then the display of the online device shows the physical parameters of all six bearings 6 simultaneously.

The driver of the agricultural machine can check the data received for a given bearing 6 while working, and if any data is outside the normal operating range, he can take the necessary actions.

With the solution according to the invention, the measuring device of the system itself can be placed close to a selected bearing, which ensures the provision of accurate data, and in addition, by bending the flexible hose as necessary, the end of the flexible hose containing the infrared temperature sensor can be placed even closer to the surface of the bearing, so the system can detect the bearing temperature very accurately and reliably.

A further advantage of the solution according to the invention is that the whole system, and all the measuring devices belonging to the system can be easily transferred to another machine or vehicle without mechanical dismounting and remounting.

## Claims

1. A wireless bearing monitoring system with a mobile measuring device for vehicles, agricultural and industrial machinery, which system comprises at least one measuring device and an online device, and a Wi-Fi network for communication between the measuring device and the online device; the measuring device comprising a housing (1) equipped with sensors, the housing (1) contains a two-sided printed circuit board (21), and a microcontroller (12), an ambient temperature and humidity sensor (16) and an acceleration sensor (14) are connected to the upper side of the printed circuit board (21), further comprising a charging unit (19) on the lower side, to which a battery (2) is connected, furthermore, an infrared temperature sensor (9) and a vibration sensor (13) connected to the printed circuit board (21), and the measuring device is provided with a vent plug (8); the connection between the sensors and the microcontroller (12) is established via the printed circuit board (21), the signals received by the microcontroller (12) are processed and then transmitted to the online device,
**characterized in that**
the infrared temperature sensor (9) is located at the end of a flexible hose (10) connected to a side wall of the housing (1), and is connected to the printed circuit board (21) by an electrical wire (20) led through the hose (10), the vibration sensor (13) fixed to the inside of the bottom of the housing (1) is also connected to the printed circuit board (21) by electrical wire (20); further comprising at least two magnets (7) on the outside of the bottom of the housing (1), one of the magnets (7) is connected to the charging unit (19) by electrical wire (20), furthermore, another magnet (7) is equipped with electrical wire (20) providing the ground, the magnets (7) are fixed to the housing (1) in an unreleasable manner, and the magnets (7) fix the housing to the surface (5) of a vehicle in a releasable manner.

2. The system according to claim 1, **characterized in that** the magnets (7) are neodymium magnets.

3. The system according to any of claims 1 to 2, **characterized in that** the length of the hose (10) is in the range from 10 to 20 cm.

4. The system according to any of claims 1 to 3, **characterized in that** the distance between the infrared temperature sensor (9) and the bearing (6) is 1 to 10 cm.

5. The system according to any of claims 1 to 3, **characterized in that** the hose (10) is made of metal or silicone.

6. The system according to any of claims 1 to 2, **characterized in that** the electrical wires (20) are connected to the magnets (7) by soldering.

7. The system according to any of claims 1 to 2, **characterized in that** the electrical wire (20) leading to the charging unit (19) includes a diode (18).

8. The system according to claim 1, **characterized in that** the system includes six measuring devices.

## Patentansprüche

1. Ein kabelloses Lagerüberwachungssystem mit mobilem Messgerät für Fahrzeuge, Lands- und Industriemaschinen, welches System mindestens ein Messgerät und ein Online-Gerät und ein Wi-Fi-Netzwerk zur Kommunikation zwischen dem Messgerät und dem Online-Gerät umfasst; die Messvorrichtung umfasst ein mit Sensoren ausgestattetes Gehäuse(1), das Gehäuse (1) enthält eine doppelseitige Leiterplatte (21) und ein Mikrocontroller (12), ein Umgebungstemperatur- und Feuchtigkeitssensor (16) und ein Beschleunigungssensor (14) sind mit der Oberseite der Leiterplatte (21) verbunden, ferner eine Ladeeinheit (19) auf der Unterseite, an die eine Batterie (2) angeschlossen ist, weiterhin ein Infrarot-Temperatursensor (9) und ein Vibrationssensor (13), die mit der Leiterplatte (21) verbunden sind, und das Messgerät ist mit einem Entlüftungsstopfen (8) versehen; die Verbindung zwischen den Sensoren und dem Mikrocontroller (12) wird über die Leiterplatte (21) hergestellt, die vom Mikrocontroller (12) empfangenen Signale werden verarbeitet und dann an das Online-Gerät übertragen,
es ist **dadurch gekennzeichnet, dass**
der Infrarot-Temperatursensor (9) befindet sich am Ende eines flexiblen Schlauchs (10), der mit einer Seitenwand des Gehäuses (1) verbunden ist, und ist mit der Leiterplatte (21) durch ein elektrisches Kabel (20) verbunden, der durch den Schlauch (10) geführt wird, der Vibrationssensor (13), der an der Innenseite des Bodens des Gehäuses (1) befestigt ist, ist ebenfalls mit der Leiterplatte (21) durch ein elektrisches Kabel (20) verbunden; ferner mit mindestens zwei Magneten (7) an der Außenseite des Bodens des Gehäuses (1), wobei einer der Magnete (7) mit der Ladeeinheit (19) durch ein elektrisches Kabel (20) verbunden ist, weiterhin ein anderer Magnet (7) mit einem elektrischen Kabel (20) ausgestattet ist, das die Masse bereitstellt, die Magnete (7) an dem Gehäuse (1) in einer nicht lösbaren Weise befestigt sind und die Magnete (7) das Gehäuse an der Oberfläche (5) eines Fahrzeugs in einer lösbaren Weise befestigen.

2. System nach Behauptung 1, **dadurch gekennzeichnet, dass** die Magnete (7) Neodym-Magnete sind.

3. System nach einem der Behauptungen 1 bis 2, **dadurch gekennzeichnet, dass** die Länge des Schlauches (10) im Bereich von 10 bis 20 cm liegt.

4. System nach einem der Behauptungen 1 bis 3, **dadurch gekennzeichnet, dass** der Abstand zwischen dem Infrarot-Temperatursensor (9) und dem Lager (6) 1 bis 10 cm beträgt.

5. System nach einem der Behauptungen 1 bis 3, **dadurch gekennzeichnet, dass** der Schlauch (10) aus Metall oder Silikon hergestellt ist.

6. System nach einem der Behauptungen 1 bis 2, **dadurch gekennzeichnet, dass** die elektrischen Kabel (20) mit den Magneten (7) durch Lötung verbunden sind.

7. System nach einem der Behauptungen 1 bis 2, **dadurch gekennzeichnet, dass** das elektrische Kabel (20), die zur Ladeeinheit (19) führt, eine Diode (18) enthält.

8. System nach Behauptung 1, **dadurch gekennzeichnet, dass** das System sechs Messgeräte umfasst.

## Revendications

1. Un système de surveillance sans fil des roulements avec dispositif de mesure mobile pour véhicules, machines agricoles et industrielles, lequel système comprend au moins un dispositif de mesure et un dispositif en ligne, et un réseau Wi-Fi pour la communication entre le dispositif de mesure et le dispositif en ligne ; l'appareil de mesure comprend un boîtier (1) équipé de capteurs, le boîtier (1) contient une carte de circuit imprimé à deux faces (21), et un microcontrôleur (12), un capteur de température et d'humidité ambiantes (16) et un capteur d'accélération (14) sont connectés à la face supérieure de la carte de circuit imprimé (21), comprenant en outre une unité de charge (19) sur la face inférieure, à laquelle est connectée une batterie (2), un capteur de température infrarouge (9) et un capteur de vibrations (13) connectés à la carte de circuit imprimé (21), et l'appareil de mesure est pourvu d'un bouchon d'aération (8) ; la connexion entre les capteurs et le microcontrôleur (12) est établie via le circuit imprimé (21), les signaux reçus par le microcontrôleur (12) sont traités puis transmis à l'appareil en ligne,
**caractérisé par le fait que**
le capteur de température infrarouge (9) est situé à l'extrémité d'un tuyau flexible (10) relié à une paroi latérale du boîtier (1) et est connecté à la carte de circuit imprimé (21) par un fil électrique (20) passant par le tuyau (10), le capteur de vibrations (13) fixé à l'intérieur du fond du boîtier (1) est également connecté à la carte de circuit imprimé (21) par un fil électrique (20) ; comprenant en outre au moins deux aimants (7) à l'extérieur du fond du boîtier (1), l'un des aimants (7) est relié à l'unité de charge (19) par un fil électrique (20), en outre, un autre aimant (7) est équipé d'un fil électrique (20) assurant la mise à la terre, les aimants (7) sont fixés au boîtier (1) de manière inamovible, et les aimants (7) fixent le boîtier à la surface (5) d'un véhicule de manière amovible.

2. Le système selon la condition 1, **caractérisé par le fait que** les aimants (7) sont des aimants en néodyme.

3. Le système selon l'une des conditions 1 à 2, **caractérisé par le fait que** la longueur du tuyau (10) est comprise entre 10 et 20 cm.

4. Le système selon l'une des conditions 1 à 3, **caractérisé par le fait que** la distance entre le capteur de température infrarouge (9) et le palier (6) est de 1 à 10 cm.

5. Le système selon l'une des conditions 1 à 3, **caractérisé par le fait que** le tuyau (10) est en métal ou en silicone.

6. Le système selon l'une des conditions 1 à 2, **caractérisé par le fait que** les fils électriques (20) sont reliés aux aimants (7) par soudure.

7. Le système selon l'une des conditions 1 à 2, **caractérisé par le fait que** le fil électrique (20) menant à l'unité de charge (19) comprend une diode (18).

8. Le système selon la condition 1, **caractérisé par le fait que** le système comprend six appareils de mesure.
